# FASCICULE DE BREVET EUROPEEN

(11) **EP 2 153 057 B1**
(45) Date de publication et mention de la délivrance du brevet: **09.03.2016**
(21) Numéro de dépôt: 07765976.1
(22) Date de dépôt: 31.05.2007
(51) Int. Cl.: F03B 13/18

(54) **DISPOSITIF PERMETTANT DE CONVERTIR L'ONDULATION ET/OU LES OSCILLATIONS D'UN LIQUIDE DANS LEQUEL IL EST AU MOINS PARTIELLEMENT IMMERGE, EN UNE ENERGIE UTILISABLE**
Wellenkraftwerk
Wave Power Plant

(43) Date de publication de la demande: 17.02.2010
(73) Titulaire: Larivain, Bruno, 13012 Marseille (FR); Larivain, Alexandre, 92800 Puteaux (FR); Larivain, Olivier, 92800 Puteaux (FR)
(72) Inventeur: Larivain, Bruno, 13012 Marseille (FR); Larivain, Alexandre, 92800 Puteaux (FR); Larivain, Olivier, 92800 Puteaux (FR)
(74) Mandataire: Regimbeau
(86) Numéro de dépôt international: PCT/FR2007/000907
(87) Numéro de publication internationale: WO 2008/148943

(56) Documents cités:
- EP-A- 0 496 146
- WO-A-2005/005244
- WO-A-2006/010783
- WO-A-2006/105778
- GB-A- 590 196
- US-A- 5 324 988
- PATENT ABSTRACTS OF JAPAN vol. 018, no. 503 (M-1677), 21 septembre 1994 (1994-09-21) & JP 06 171577 A (KUROISHI TEKKO KK), 21 juin 1994 (1994-06-21)

## Description

La présente invention a pour objet un dispositif permettant de convertir l'ondulation et/ou les oscillations d'un liquide dans lequel il est au moins partiellement immergé, en une énergie utilisable. Elle s'applique notamment mais non exclusivement à la conversion de l'énergie de la houle, des vagues et de la marée en énergie électrique.

On sait qu'il existe déjà des dispositifs permettant de convertir l'énergie mécanique de la houle, des vagues et de la marée en énergie électrique. Ainsi, notamment, on a déjà proposé dans le brevet FR 2 834 757 un dispositif relié au fond de la mer par un ancrage, ce dernier comprenant au moins un premier élément de liaison souple agissant sur un vérin hydraulique monté dans un circuit hydraulique incluant un moteur hydraulique de manière à ce que l'action de l'élément de liaison sur le vérin lors des déplacements verticaux de l'appareil, engendre dans le circuit hydraulique une variation de débit et/ou de pression permettant l'entraînement en rotation dudit moteur hydraulique. De même par le brevet JP 5 288 141, on connaît un dispositif dans lequel des flotteurs guidés chacun sur un mât ancré dans le fond sous-marin par l'intermédiaire de galets, actionnent des crémaillères entraînant en rotation une génératrice de courant électrique. De plus on connaît des dispositifs par les brevets WO 2006/010783, EP 0496 146 et GB 590 196.

Néanmoins, ces dispositifs sont relativement complexes et comprennent généralement un nombre relativement important de pièces telles que par exemple des clapets, des roues cinétiques, des câbles, des poulies de renvoi, des ensembles crémaillères - pignons ce qui accroît les problèmes d'usure et de corrosion et nécessite des efforts de maintenance importants.

L'invention a donc plus particulièrement pour but de supprimer ces inconvénients. A cet effet, elle propose un dispositif correspondant à la revendication 1, le dispositif faisant intervenir comme dans l'exemple précédemment invoqué, un flotteur guidé par un dispositif de guidage ancré dans le fond sous-marin, à l'aide de moyens de guidage et comportant des moyens de conversion permettant de convertir les déplacements relatifs entre le flotteur et le dispositif de guidage en une énergie utilisable telle que par exemple l'énergie électrique.

Selon l'invention, les moyens de guidage comprennent au moins un galet, un pignon ou une roue en contact avec un chemin de roulement du dispositif de guidage, et les moyens de conversion comprennent au moins une génératrice électrique entraînée en rotation par ledit galet, ledit pignon ou ladite roue.

Le galet, le pignon ou la roue est monté rotatif autour d'un axe lié au flotteur.

Grâce à ces dispositions, le mouvement de coulissement du flotteur soumis à la houle entraîne un mouvement rotatif dudit galet, pignon ou roue qui est connecté à au moins une génératrice ce qui permet de produire de l'énergie électrique tout en limitant la chaîne cinématique au strict nécessaire.

Avantageusement :
- le dispositif de guidage peut comprendre au moins deux chemins de roulement opposés ;
- les moyens de guidage peuvent comprendre au moins deux roues ou deux galets montés rotatifs autour de deux axes de rotation respectifs solidaires dudit flotteur et mobiles radialement par rapport au dispositif de guidage, ces deux roues ou galets étant disposés de manière à pouvoir rouler respectivement sur lesdits chemins de roulement ;
- les moyens de conversion peuvent comprendre des moyens pour convertir le mouvement de rotation des roues ou galets en énergie utilisable ;
- le flotteur peut comprendre des moyens permettant aux roues ou aux galets d'exercer une pression antagoniste sur les chemins de roulement de manière à permettre auxdites roues ou auxdits galets d'assurer à la fois :
   ∘ le guidage du flotteur sur le dispositif de guidage ; et
   ∘ leur entraînement en rotation lors des déplacements dudit flotteur.

Selon une variante d'exécution de l'invention, le dispositif comprend :
- un support de guidage sensiblement vertical fixé directement ou indirectement à un fond sous-marin ;
- un flotteur comportant :
   un trou traversant, d'axe sensiblement vertical, qui débouche dans sa face supérieure et dans sa face inférieure, le diamètre de ce trou étant sensiblement supérieur à celui du support de guidage afin de permettre le coulissement du flotteur par rapport audit support ;
      ∘ au moins un compartiment qui comprend une ouverture antérieure débouchant dans ledit trou traversant, une paroi inférieure, une paroi supérieure, une paroi postérieure et deux parois latérales comportant chacune un orifice d'axe horizontal en regard l'un de l'autre ; ce compartiment comprend également :
         ➢ au moins un moyen de guidage tel qu'un galet, un pignon ou une roue dont l'axe horizontal est sensiblement parallèle au plan de ladite ouverture, et disposé de manière à être en contact avec la surface dudit support de guidage lorsque celui-ci est solidarisé au flotteur ;
         ➢ au moins un arbre d'entraînement passant par l'axe horizontal dudit moyen de guidage et traversant lesdits orifices desdites parois latérales, au moins l'une des extrémités de cet arbre d'entraînement étant reliée à au moins une génératrice comprise dans le corps du flotteur.

Ainsi, sous l'action de la houle et/ou des vagues et/ou de la marée et/ou de la poussée d'Archimède, le flotteur est animé d'un mouvement vertical alternatif qui entraîne les moyens de guidage en contact avec la surface du support de guidage. Le mouvement rotatif alternatif de ces moyens de guidage est transmis ensuite aux arbres d'entraînement puis à la génératrice qui peut produire de cette façon de l'énergie électrique.

De manière avantageuse, afin d'empêcher le passage du liquide dans le corps du flotteur, au moins l'une des faces de chaque paroi latérale desdits compartiments peut comprendre des joints d'étanchéité pouvant être toriques, disposés de manière à recouvrir partiellement lesdits orifices de ces parois latérales et à enserrer les arbres d'entraînement.

Avantageusement, le dispositif selon l'invention peut également comprendre des moyens permettant d'exercer une pression des moyens de guidage sur la surface du support de guidage de façon à éviter le glissement intempestif de ces moyens de guidage.

De manière avantageuse, le dispositif selon l'invention peut comprendre plusieurs génératrices pouvant chacune fonctionner alternativement dans un sens et dans l'autre.

Le dispositif selon l'invention pourra également comprendre :
- des moyens d'inversion de la tension générée par les génératrices selon le sens de rotation desdites génératrices ;
- des moyens de conversion de la tension générée par les génératrices en une tension alternative out continue ;
- des moyens de stabilisation et/ou de régulation des tensions générées par lesdites génératrices

Avantageusement, l'énergie thermique dégagée par les génératrices au cours de leur fonctionnement peut permettre de chauffer de l'eau rendant ainsi possible la récupération d'énergie sous forme d'électricité mais également sous forme d'eau chaude.

Des modes d'exécution de l'invention seront décrits ci-après, à titre d'exemples non limitatifs, avec référence aux dessins annexés, dans lesquels :

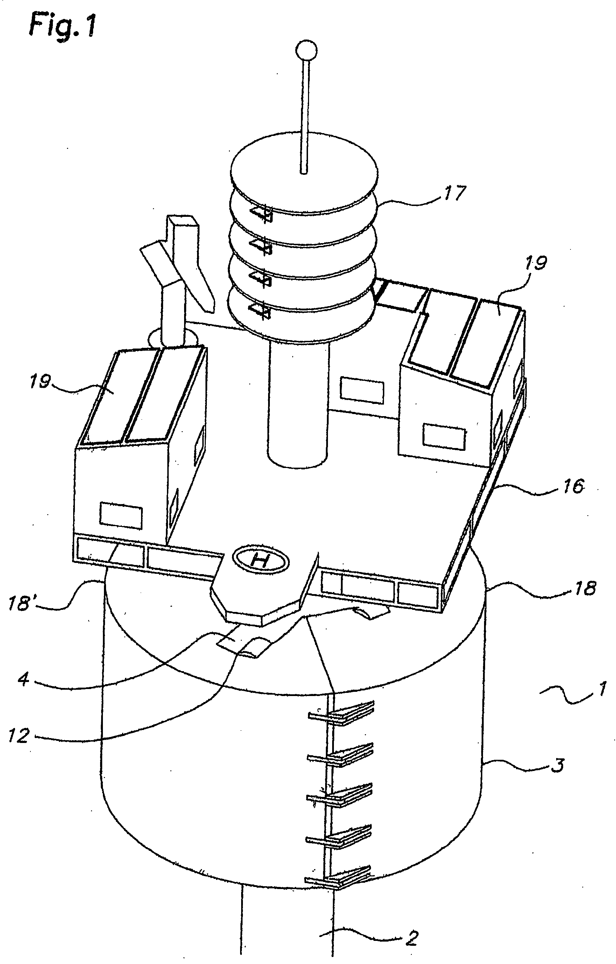

La figure 1 est une représentation schématique du dispositif selon l'invention surplombé d'une plate-forme industrielle.
La figure 2 est une représentation schématique du dispositif de guidage et du flotteur du dispositif selon l'invention en position désassemblée.
Les figures 3, 4 et 5 sont une représentation schématique du mouvement de flotteurs coulissant chacun autour d'un pied d'un dispositif de guidage tripode.

Dans cet exemple, le dispositif selon l'invention 1 comprend un dispositif de guidage 2 constitué par un support de guidage, d'axe sensiblement vertical, fixé à un fond sous-marin ou à une embase flottante (non représentée) qui est maintenue en position à l'aide d'ancrages lui permettant de demeurer fixe par rapport au fond sous-marin.

Ainsi, la fixation du dispositif de guidage 2 au fond sous-marin peut être notamment réalisée en maintenant en position l'embase flottante à l'aide de lignes d'ancrage sensiblement parallèles et constamment sous tension.

Le support de guidage 2 peut être notamment cylindrique ou à facettes et est conformé préférentiellement, de façon à ne pas opposer de résistance excessive aux éléments.

Le dispositif selon l'invention 1 comprend également un flotteur 3 comportant un trou traversant 4, qui débouche sensiblement dans la zone médiane de sa face supérieure et de sa face inférieure. Afin de permettre le coulissement du flotteur 3 par rapport audit support de guidage 2, le diamètre dudit trou 4 est sensiblement supérieur à celui du support de guidage 2.

Selon une variante d'exécution de l'invention, le support de guidage 2 peut comprendre plusieurs pieds sensiblement verticaux. Ainsi, à titre d'exemple, il peut être tripode, trois flotteurs du type susdit 3 pouvant chacun coulisser par rapport à l'un des trois pieds 30, 30', 30" du support de guidage 2.

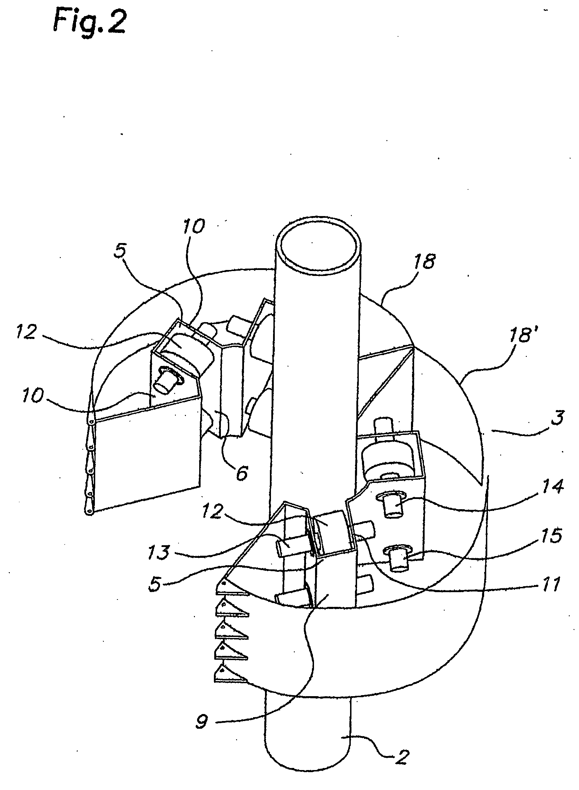

De manière avantageuse, la structure et la forme du flotteur 3 sont conçues de façon à assurer sa flottabilité, ce qui permet de faciliter son transport vers la terre ferme afin de procéder à des visites périodiques et/ou d'effectuer des réparations. Ainsi, tel que cela est illustré sur la figure 2, le flotteur 3 peut être composé de deux coques flottantes démontables 18, 18' pouvant s'assembler et se désassembler autour d'un axe sensiblement vertical.

Le flotteur 3 peut comprendre quatre compartiments 5 disposés à intervalles sensiblement réguliers autour dudit trou traversant 4. Chacun de ces compartiments 5 comporte une ouverture antérieure 6 débouchant dans ledit trou traversant 4, une paroi inférieure, une paroi supérieure, une paroi postérieure 9 et deux parois latérales 10 comportant chacune un orifice 11 d'axe horizontal en regard l'un de l'autre.

Selon une variante d'exécution de l'invention, les compartiments 5 peuvent être cylindriques, ils comportent alors chacun une ouverture 6 débouchant dans ledit trou traversant 4, une paroi inférieure, une paroi supérieure, et une paroi latérale 10 comportant deux orifices 11 d'axe horizontal en regard l'un de l'autre.

Selon une autre variante d'exécution de l'invention, chacun desdits compartiments 5 ne comprend pas de paroi inférieure et de paroi supérieure, ils constituent alors avec ledit trou traversant 4, un trou traversant unique qui débouche dans la face supérieure et inférieure du flotteur 3. Ainsi, dans l'hypothèse où le flotteur 3 comprend quatre compartiments 5 disposés à intervalles réguliers, ceux-ci constituent avec le trou traversant 4 du flotteur 3, un trou traversant unique ayant sensiblement la forme d'une croix.

Chaque compartiment 5 comprend également :
- Au moins un moyen de guidage 12 dont l'axe horizontal est sensiblement parallèle au plan de ladite ouverture 6, et disposé de manière à être en contact avec la surface dudit support de guidage 2 lorsque celui-ci est solidarisé au flotteur 3.
- Au moins un arbre d'entraînement 13 passant par l'axe horizontal dudit moyen de guidage et traversant lesdits orifices 11 desdites parois latérales 10. Au moins l'une des extrémités de cet arbre d'entraînement 13 étant reliée à au moins une génératrice 14 comprise dans le corps du flotteur 3.

Ledit moyen de guidage 12 peut être notamment un galet, une roue ou un pignon engrenant avec une crémaillère (non représentée) s'étendant verticalement sur la surface du support de guidage 2.

Avantageusement, afin d'empêcher le passage de l'eau dans le corps du flotteur 3, celui-ci peut comprendre des joints d'étanchéité pouvant être toriques 15 qui sont disposés de façon à recouvrir partiellement lesdits orifices 11 desdites parois latérales 10 et à enserrer lesdits arbres d'entraînement 13.

De plus, le dispositif selon l'invention 1 peut également comprendre des moyens (non représentés) permettant d'exercer une pression des moyens de guidage 12 sur la surface du support de guidage 2 de façon à éviter le glissement intempestif de ces moyens de guidage 12.

Les génératrices 14 sont des génératrices de courant continu ou alternatif toutefois, selon une variante d'exécution de l'invention, elles peuvent être remplacées par des pompes hydrauliques (non représentées).

Avantageusement, le dispositif selon l'invention 1 peut comprendre plusieurs génératrices 14 qui sont de préférence étanches et pouvant chacune fonctionner alternativement dans un sens et dans l'autre.

De manière avantageuse, l'énergie thermique dégagée par les génératrices 14 au cours de leur fonctionnement peut permettre de chauffer de l'eau rendant ainsi possible la récupération d'énergie sous forme d'électricité mais également sous forme d'eau chaude.

De cette façon, sous l'action de la houle et/ou des vagues et/ou de la marée et/ou de la poussée d'Archimède, le flotteur 3 est animé d'un mouvement vertical alternatif qui entraîne les moyens de guidage 12 en contact avec la surface du support de guidage 2. Le mouvement rotatif alternatif de ces moyens de guidage 12 est transmis ensuite aux arbres d'entraînement 13 puis à la génératrice 14 qui peut produire de cette façon de l'énergie électrique.

Avantageusement, le mouvement vertical alternatif du flotteur 3 permet d'assurer le nettoyage automatique du dispositif de guidage 2 et des moyens de guidage 12 en empêchant la fixation d'éléments tels que des crustacés et/ou des sédiments.

De manière avantageuse, le dispositif selon l'invention 1 peut être surplombé d'une plate-forme industrielle 16 supportée par le support de guidage 2 et sur laquelle l'énergie électrique ainsi produite peut être utilisée pour alimenter ses équipements industriels. Ces plates-formes 16 peuvent comprendre au moins un dispositif de production d'énergie additionnel tel qu'un dispositif de production d'énergie éolienne 17 et/ou un dispositif de production d'énergie thermique (non représenté) et/ou un dispositif de production d'énergie solaire 19.

Des dispositifs selon l'invention 1 surplombés ou non de plates-formes industrielles 16 peuvent être regroupés dans des espaces relativement restreints afin de former des "fermes houlomotrices" ou plus généralement des "fermes multiénergétiques".

Le dispositif selon l'invention 1 peut comprendre un dispositif de contrôle électronique (non représenté) permettant de commander notamment :
- les générateurs 14 en temps réel et donc de gérer la production d'énergie en fonction des besoins ;
- le flotteur 3 afin d'adapter l'amplitude de sa course en fonction du marnage et des mouvements de la houle ; l'amplitude de la course du flotteur 3 devant être au moins égale à la somme du marnage, de l'amplitude de la houle et d'un écart de sécurité.

De manière avantageuse, le flotteur 3 peut comprendre à sa base des compartiments de ballastage (non représentés), dont le remplissage peut être commandé à l'annonce d'une tempête majeure, afin de permettre sa plongée et d'éviter ainsi qu'il ne soit soumis à des mouvements excessifs sous l'action d'une houle particulièrement forte ; le remplissage et le vidage desdits compartiments de ballastage pouvant être commandés par ledit dispositif de contrôle électronique.

Plusieurs dispositifs selon l'invention 1 peuvent être regroupés en réseau et comprendre un dispositif de contrôle électronique de type susdit permettant de commander :
- l'actionnement et l'arrêt du coulissement des flotteurs 3 par rapport aux dispositifs de guidage 2 ;
- ainsi que la résistance rencontrée par les moyens de guidage 12 lors de leurs déplacements sur la surface desdits dispositifs de guidage 2.

De cette manière et de façon avantageuse, ce regroupement en réseau des dispositifs selon l'invention 1 permet d'assurer une production d'une énergie électrique moyenne dans le temps en effet, grâce à un dispositif de contrôle de type susdit, il est possible de commander un déphasage approprié de la course de chacun desdits flotteurs 3 ce qui permet de s'affranchir des contraintes liées aux mouvements alternatifs de la houle.

La variante d'exécution de l'invention selon laquelle le support de guidage 2 peut comprendre plusieurs pieds sensiblement verticaux permet également de s'affranchir des mouvements alternatifs de la houle grâce à un déphasage approprié des différents flotteurs 3.

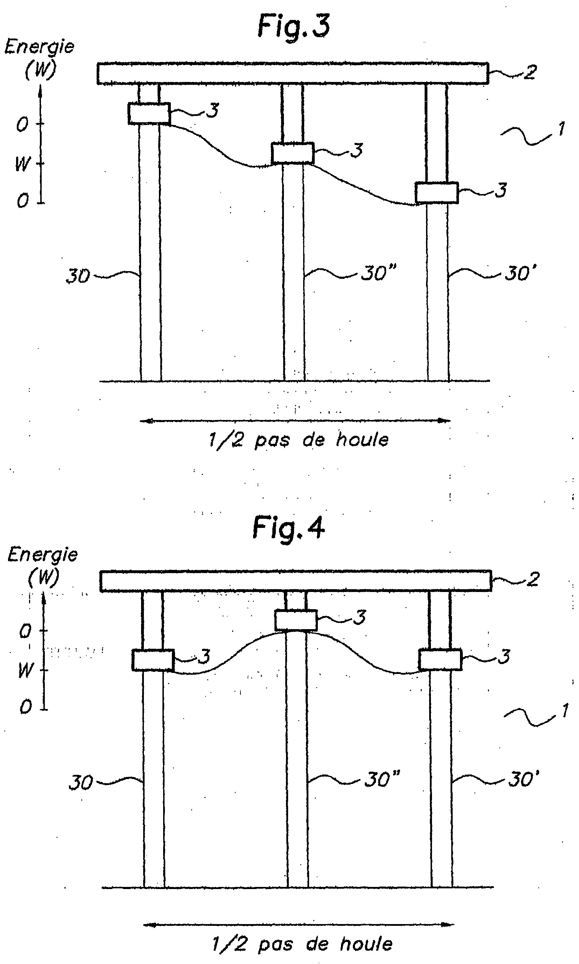

A titre d'exemple, en prenant les hypothèses suivantes :
- tel que cela est représenté sur les figures 3,4 et 5, le support de guidage 2 est tripode, il comprend deux pieds latéraux 30, 30' et un pied médian 30" équidistant de ces deux autres pieds ;
- la distance entre les deux pieds latéraux 30, 30' est sensiblement égale à un demi pas de houle ;
- le dispositif selon l'invention 1 comprend un dispositif de contrôle du type susdit (non représenté) qui peut commander :
   ∘ l'actionnement et l'arrêt du coulissement des flotteurs 3 par rapport aux dispositifs de guidage 2 ;
   ∘ ainsi que la résistance rencontrée par les moyens de guidage 12 lors de leurs déplacements sur la surface desdits dispositifs de guidage 2.

La figure 3 illustre de manière schématique le positionnement des différents flotteurs 3 à l'instant t₀. Les flotteurs 3 coulissant autour des pieds latéraux 30, 30' sont respectivement situés en haut et au creux de la vague, leur vitesse respective étant nulle à cet instant, l'énergie qu'ils produisent est également nulle. Par contre, le flotteur 3 coulissant autour du pied médian 30"" est situé sensiblement "au milieu" de la vague, et produit donc une énergie non nulle égale à W. Par conséquent, à l'instant t₀, le dispositif selon l'invention 1 produit une énergie ayant une valeur égale à W.

La figure 4 illustre de manière schématique le positionnement des différents flotteurs 3 à l'instant t₀ + ¼ du pas de la houle. Le flotteur 3 coulissant autour du pied médian 30"" est situé au sommet de la vague, l'énergie qu'il produit est alors nulle. Les flotteurs 3 coulissant autour des pieds latéraux 30, 30' quant à eux sont sensiblement disposés "au milieu" de la vague et produisent donc chacun une énergie égale à W. Par conséquent, à l'instant t₀ + ¼ du pas de la houle, le dispositif selon l'invention 1 produit une énergie ayant une valeur égale à 2W.

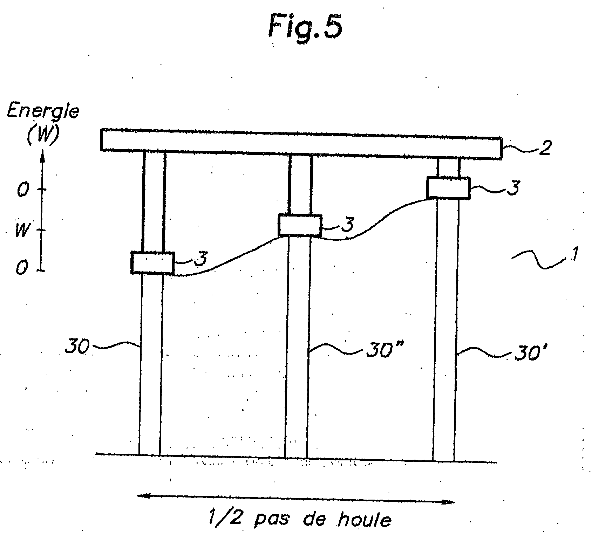

La figure 5 illustre de manière schématique le positionnement des différents flotteurs 3 à l'instant t₀ + ½ du pas de la houle. Les flotteurs 3 coulissant autour des pieds latéraux 30, 30' sont respectivement situés au creux et au sommet de la vague, leur vitesse respective étant nulle à cet instant, l'énergie qu'ils produisent est également nulle. Par contre, le flotteur 3 coulissant autour du pied médian 30"" est situé sensiblement "au milieu" de la vague, et produit donc une énergie non nulle égale à W. Par conséquent, à l'instant t₀ + ½ du pas de la houle, le dispositif selon l'invention 1 produit une énergie ayant une valeur égale à W.

Afin de rendre sensiblement constante, la valeur de l'énergie produite par le dispositif selon l'invention 1, ledit dispositif de contrôle peut commander l'arrêt du coulissement de l'un des flotteurs 3 coulissant autour des pieds latéraux 30, 30' aux instants t₀ + (k * ¼) du pas de la houle (k étant un entier naturel impair différent de 0). De cette façon, l'énergie (et donc la tension) produite par le dispositif selon l'invention 1 est constante (en l'espèce, elle est égale à W), ledit dispositif de contrôle et le support de guidage 2 constituant des moyens de stabilisation et/ou de régulation des tensions générées par lesdites génératrices 14.

Afin de transformer la tension continue ou alternative du courant produit par les génératrices 14 respectivement en un courant de tension alternative ou continue, le dispositif selon l'invention 1 pourra également comprendre des moyens de conversion de la tension continue ou alternative générée par les génératrices 14 respectivement en une tension alternative ou continue, tels que des convertisseurs de tension (non représentés), permettant par exemple de transformer un courant continu de 650 V en un courant alternatif triphasé de 380 V utilisable directement à proximité du dispositif selon l'invention 1, comme par exemple, sur une plate-forme industrielle 16 le surplombant. Avantageusement, le dispositif selon l'invention pourra comprendre un "bus drive" (non représenté) permettant de sommer les énergies de chaque génératrice 14 et permettant ainsi de transformer un courant alternatif de 750 V produit par les génératrices en un courant continu de 650 V.

## Revendications

1. Dispositif (1) comprenant un flotteur (3) guidé le long d'un dispositif de guidage (2) ancré dans le fond marin à l'aide de moyens de guidage (12) et comportant des moyens de conversion (14) permettant de convertir les déplacements relatifs entre le flotteur (3) et le dispositif de guidage (2) en une énergie utilisable, les moyens de guidage (12) comprenant au moins un galet, un pignon ou une roue en contact avec un chemin de roulement du dispositif de guidage (2), et les moyens de conversion (14) comprenant au moins une génératrice électrique entraînée en rotation par ledit galet, ledit pignon ou ladite roue, le galet, le pignon ou la roue étant monté rotatif autour d'un axe (13) lié au flotteur (3).
**caractérisé en ce que** le flotteur (3) est composé de deux coques flottantes démontables (18, 18') pouvant s'assembler et se désassembler autour d'un axe sensiblement vertical,

2. Dispositif selon la revendication 1,
**caractérisé en ce que** :
• le dispositif de guidage (2) comprend au moins deux chemins de roulement opposés ;
• les moyens de guidage (12) comprennent au moins deux roues ou deux galets montés rotatifs autour de deux axes de rotation respectifs solidaires dudit flotteur (3) et mobiles radialement par rapport au dispositif de guidage (2), ces deux roues ou galets étant disposés de manière à pouvoir rouler respectivement sur lesdits chemins de roulement ;
• les moyens de conversion (14) comprennent des moyens pour convertir le mouvement de rotation des roues ou galets en énergie utilisable ;
• le flotteur (3) comprend des moyens permettant aux roues ou aux galets d'exercer une pression antagoniste sur les chemins de roulement de manière à permettre auxdites roues ou auxdits galets d'assurer à la fois :
∘ le guidage du flotteur (3) sur le dispositif de guidage (2) ; et
∘ leur entraînement en rotation lors des déplacements dudit flotteur (3).

3. Dispositif (1) selon l'une des revendications précédentes, **caractérisé en ce qu'**il comprend :
• un support de guidage (2) sensiblement vertical fixé directement ou indirectement à un fond sous-marin ;
• un flotteur (3) comportant :
∘ un trou traversant (4), d'axe sensiblement vertical, qui débouche dans sa face supérieure et dans sa face inférieure, le diamètre de ce trou (4) étant sensiblement supérieur à celui du support de guidage (2) afin de permettre le coulissement du flotteur (3) par rapport audit support (2);
∘ au moins un compartiment (5) qui comprend une ouverture antérieure (6) débouchant dans ledit trou traversant (4), une paroi inférieure, une paroi supérieure, une paroi postérieure (9) et deux parois latérales (10) comportant chacune un orifice d'axe horizontal (11) en regard l'un de l'autre ; ce compartiment (5) comprend également :
➢ au moins un moyen de guidage (12) tel qu'un galet, ou une roue dont l'axe horizontal est sensiblement parallèle au plan de ladite ouverture (6), et disposé de manière à être en contact avec la surface dudit support de guidage (2) lorsque celui-ci est solidarisé au flotteur (3) ;
➢ au moins un arbre d'entraînement (13) passant par l'axe horizontal dudit moyen de guidage (2) et traversant lesdits orifices (11) desdites parois latérales (10), au moins l'une des extrémités de cet arbre d'entraînement (13) étant reliée à au moins une génératrice (14) comprise dans le corps du flotteur (3).

4. Dispositif (1) selon la revendication 3,
**caractérisé en ce que** le dispositif de guidage (2) est fixé à une embase flottante qui est maintenue en position à l'aide de lignes d'ancrage sensiblement parallèles et constamment sous tension lui permettant de demeurer fixe par rapport au fond sous-marin.

5. Dispositif (1) selon l'une des revendications 3 et 4,
**caractérisé en ce que** le support de guidage (2) est cylindrique ou à facettes et est conformé de façon à ne pas opposer de résistance excessive aux éléments.

6. Dispositif (1) selon l'une des revendications 3 à 5,
**caractérisé en ce que** le support de guidage (2) comprend plusieurs pieds sensiblement verticaux, un flotteur (3) coulissant par rapport à chacun de ces pieds.

7. Dispositif (1) selon l'une des revendications 3 à 6,
**caractérisé en ce que** les compartiments (5) sont cylindriques.

8. Dispositif (1) selon l'une des revendications 3 à 7,
**caractérisé en ce que** chacun desdits compartiments (5) ne comprend pas de paroi inférieure et de paroi supérieure.

9. Dispositif (1) selon l'une des revendications 3 à 8,
**caractérisé en ce que** le corps du flotteur (3) comprend des joints d'étanchéité toriques (15) qui sont disposés de façon à recouvrir partiellement lesdits orifices (11) desdites parois latérales (10) et à enserrer lesdits arbres d'entraînement (13).

10. Dispositif (1) selon l'une des revendications 3 à 9,
**caractérisé en ce que** les moyens de conversion (14) sont constitués par des pompes hydrauliques.

11. Dispositif (1) selon l'une des revendications 3 à 10,
**caractérisé en ce que** la (les) génératrice(s) (14) est (sont) étanches et fonctionne(ent) alternativement dans un sens et dans l'autre.

12. Dispositif (1) selon l'une des revendications 3 à 11,
**caractérisé en ce que** les génératrices (14) constituent un moyen de production d'énergie thermique, cette énergie thermique dégagée par les génératrices (14) au cours de leur fonctionnement permettant de chauffer de l'eau.

13. Dispositif (1) selon l'une des revendications 3 à 12,
**caractérisé en ce qu'**il est surplombé d'une plate-forme industrielle (16) supportée par le support de guidage (2) et sur laquelle l'énergie électrique ainsi produite peut être utilisée pour alimenter ses équipements industriels.

14. Dispositif (1) selon la revendication 13,
**caractérisé en ce que** les plates-formes (16) comprennent un dispositif de production d'énergie éolienne (17) et/ou un dispositif de production d'énergie thermique et/ou un dispositif de production d'énergie solaire (19).

15. Dispositif (1) selon l'une des revendications 3 à 14,
**caractérisé en ce que** les dispositifs selon l'invention (1) sont regroupés en réseau.

16. Dispositif (1) selon l'une des revendications 3 à 15,
**caractérisé en ce qu'**il comprend un dispositif de contrôle électronique permettant de commander :
• les générateurs (14) en temps réel et donc de gérer la production d'énergie en fonction des besoins ;
• le flotteur (3) afin d'adapter l'amplitude de sa course en fonction du marnage et des mouvements de la houle ; l'amplitude de la course du flotteur (3) devant être au moins égale à la somme du marnage, de l'amplitude la houle et d'un écart de sécurité ;
• l'actionnement et l'arrêt du coulissement des flotteurs (3) par rapport aux dispositifs de guidage (2) ;
• la résistance rencontrée par les moyens de guidage (12) lors de leurs déplacements sur la surface desdits dispositifs de guidage (2).

17. Dispositif (1) selon l'une des revendications 3 à 16,
**caractérisé en ce que** le flotteur (3) comprend à sa base des compartiments de ballastage.

18. Dispositif (1) selon la revendication 17,
**caractérisé en ce que** le remplissage et le vidage desdits compartiments de ballastage sont commandés par ledit dispositif de contrôle électronique.

19. Dispositif (1) selon l'une des revendications 3 à 18,
**caractérisé en ce qu'**il comprend des moyens de conversion de la tension continue ou alternative générée par les génératrices (14) respectivement en une tension alternative ou continue.

20. Dispositif (1) selon l'une des revendications 3 à 19,
**caractérisé en ce qu'**il comprend un "bus drive" permettant de sommer les énergies de chaque génératrice (14).

## Patentansprüche

1. Vorrichtung (1), umfassend einen Schwimmer (3), der entlang einer Führungsvorrichtung (2) geführt wird, die mit Hilfe von Führungseinrichtungen (12) auf dem Meeresgrund verankert ist und Umwandlungseinrichtungen (14) umfasst, durch die sich die relativen Verschiebungen zwischen dem Schwimmer (3) und der Führungsvorrichtung (2) in verwertbare Energie umwandeln lassen, wobei die Führungseinrichtungen (12) mindestens eine Rolle, ein Zahnrad oder ein Rad in Kontakt mit einem Rollweg der Führungsvorrichtung (2) umfassen, und die Umwandlungseinrichtungen (14) mindestens einen elektrischen Generator umfassen, der durch die Rolle in Rotation versetzt wird, wobei das Zahnrad oder das Rad, die Rolle, das Zahnrad oder das Rad drehbar um eine mit dem Schwimmer (3) verbundene Achse (13) befestigt sind,
**dadurch gekennzeichnet, dass** der Schwimmer (3) aus zwei demontierbaren schwimmenden Schalen (18, 18') besteht, die um eine im Wesentlichen vertikale Achse zusammengefügt und zerlegt werden können.

2. Vorrichtung nach Anspruch 1,
**dadurch gekennzeichnet, dass**:
• die Führungsvorrichtung (2) mindestens zwei entgegengesetzte Rollwege umfasst;
• die Führungseinrichtungen (12) mindestens zwei Räder oder zwei Rollen umfasst, die jeweils drehbar um zwei Rotationsachsen, die mit dem Schwimmer (3) fest verbunden und radial beweglich bezüglich der Führungsvorrichtung (2) sind, montiert sind; wobei diese beiden Räder oder Rollen so angeordnet sind, dass sie jeweils auf den Rollwegen rollen können;
• die Umwandlungseinrichtungen (14) Einrichtungen umfassen, um die Rotationbewegung der Räder oder Rollen in verwertbare Energie umzuwandeln;
• der Schwimmer (3) Einrichtungen umfasst, die es ermöglichen, dass die Räder oder Rollen einen Gegendruck auf die Rollwege ausüben, derart, dass es ermöglicht wird, dass die Räder oder Rollen gleichzeitig folgendes sicherstellen:
∘ die Führung des Schwimmers (3) auf der Führungsvorrichtung (2); und
∘ ihr Versetzen in Rotation während der Bewegungen des Schwimmers (3).

3. Vorrichtung (1) nach einem der vorhergehenden Ansprüche,
**dadurch gekennzeichnet, dass** sie folgendes umfasst:
• einen im Wesentlichen vertikal direkt oder indirekt auf dem Meeresgrund befestigten Führungsträger (2);
• einen Schwimmer (3), der folgendes umfasst:
∘ ein Durchgangsloch (4), mit im Wesentlichen vertikaler Achse, welches in seine Oberseite und seine Unterseite einmündet, wobei der Durchmesser dieses Lochs (4) im Wesentlichen größer ist als derjenige des Führungsträgers (2), um das Gleiten des Schwimmers (3) bezüglich des Trägers (2) zu ermöglichen;
∘ mindestens ein Kompartiment (5), das eine vordere Öffnung (6) umfasst, die in das Durchgangsloch (4) einmündet, eine untere Wand, eine obere Wand, eine hintere Wand (9) und zwei seitliche Wände (10), die jeweils eine Öffnung mit zueinander horizontaler Achse (11) umfassen; wobei dieses Kompartiment (5) auch folgendes umfasst:
➢ mindestens eine Führungseinrichtung (12), wie eine Rolle oder ein Rad, dessen horizontale Achse im Wesentlichen parallel zur Ebene der Öffnung (6) ist und so angeordnet ist, dass es mit der Oberfläche des Führungsträgers (2) in Kontakt ist, wenn dieser fest mit dem Schwimmer (3) verbunden ist;
➢ mindestens eine Antriebswelle (13), die durch die horizontale Achse der Führungseinrichtung (2) hindurchläuft und die die Öffnungen (11) der seitlichen Wände (10) durchquert, wobei mindestens eines der Enden dieser Antriebswelle (13) mit mindestens einem Generator (14) verbunden ist, der in dem Rumpf des Schwimmers (3) mitumfasst ist.

4. Vorrichtung (1) nach Anspruch 3,
**dadurch gekennzeichnet, dass** die Führungsvorrichtung (2) an einem schwimmenden Sockel befestigt ist, der mit Hilfe von im Wesentlichen parallelen und sich beständig unter Spannung befindlichen Verankerungsleitungen gehalten wird, die es ermöglichen, dass er bezüglich des Meeresgrundes fixiert verbleibt.

5. Vorrichtung (1) nach einem der Ansprüche 3 bis 4,
**dadurch gekennzeichnet, dass** der Führungsträger (2) zylindrisch oder geschliffen und so passend ist, dass er den Elementen keinen übermäßigem Widerstand entgegensetzt.

6. Vorrichtung (1) nach einem der Ansprüche 3 bis 5,
**dadurch gekennzeichnet, dass** der Führungsträger (2) mehrere im Wesentlichen vertikale Füße und einen Schwimmer (3), der bezüglich eines jeden dieser Füßen gleitet, umfasst.

7. Vorrichtung (1) nach einem der Ansprüche 3 bis 6,
**dadurch gekennzeichnet, dass** die Kompartimente (5) zylindrisch sind.

8. Vorrichtung (1) nach einem der Ansprüche 3 bis 7,
**dadurch gekennzeichnet, dass** die Kompartimente (5) jeweils keine untere Wand und keine obere Wand umfassen.

9. Vorrichtung (1) nach einem der Ansprüche 3 bis 8,
**dadurch gekennzeichnet, dass** der Rumpf des Schwimmers (3) O-Dichtungen (15) umfasst, die so angeordnet sind, dass sie die Öffnungen (11) der seitlichen Wände (10) teilweise bedecken und die Antriebswellen (13) fest umschließt.

10. Vorrichtung (1) nach einem der Ansprüche 3 bis 9,
**dadurch gekennzeichnet, dass** die Umwandlungseinrichtungen (14) aus hydraulischen Pumpen bestehen.

11. Vorrichtung (1) nach einem der Ansprüche 3 bis 10,
**dadurch gekennzeichnet, dass** der (die) Generator(en) (14) dicht ist (sind) und abwechselnd in der einen und in der anderen Richtung funktioniert (funktionieren).

12. Vorrichtung (1) nach einem der Ansprüche 3 bis 11,
**dadurch gekennzeichnet, dass** die Generatoren (14) eine Einrichtung zur Produktion von Wärmeenergie darstellen, wobei sich durch diese durch die Generatoren (14) während ihres Betriebs abgegebene Wärmeenergie Wasser erwärmen lässt.

13. Vorrichtung (1) nach einem der Ansprüche 3 bis 12,
**dadurch gekennzeichnet, dass** über ihr eine Industrieplattform (16) aufragt, die von dem Führungsträger (2) getragen wird und auf der die so erzeugte elektrische Energie verwendet werden kann, um ihre Industrieanlagen zu speisen.

14. Vorrichtung (1) nach Anspruch 13,
**dadurch gekennzeichnet, dass** die Plattformen (16) eine Vorrichtung zur Erzeugung von Windenergie (17) und/oder eine Vorrichtung zur Erzeugung von Wärmeenergie und/oder eine Vorrichtung zur Erzeugung von Solarenergie (19) umfasst.

15. Vorrichtung (1) nach einem der Ansprüche 3 bis 14,
**dadurch gekennzeichnet, dass** die Vorrichtungen gemäß der Erfindung (1) vernetzt gruppiert sind.

16. Vorrichtung (1) nach einem der Ansprüche 3 bis 15,
**dadurch gekennzeichnet, dass** sie eine elektronische Steuervorrichtung umfasst, durch die sich folgendes steuern lässt:
• die Generatoren (14) in Realzeit und damit zur Führung der Energieproduktion als Funktion des Bedarfs;
• der Schwimmer (3), um die Amplitude seines Verlaufs in Funktion des Tidenhubs und der Bewegungen des Seegangs anzupassen; wobei die Amplitude des Verlaufs des Schwimmers (3) mindestens gleich der Summe von Tidenhub, Seegangsamplitude und einer Sicherheüsspanne sein muss;
• das Betreiben und das Anhalten des Gleitens des Schwimmers (3) bezüglich der Führungsvorrichtung (2);
• der Widerstand, auf den die Führungseinrichtungen (12) bei ihrer Verschiebung auf der Oberfläche der Führungsvorrichtungen (2) treffen.

17. Vorrichtung (1) nach einem der Ansprüche 3 bis 16,
**dadurch gekennzeichnet, dass** der Schwimmer (3) an seiner Basis Ballastierungskompartimente umfasst.

18. Vorrichtung (1) nach Anspruch 17,
**dadurch gekennzeichnet, dass** das Befüllen und Entleeren der Kompartimente durch die elektronische Steuervorrichtung gesteuert werden.

19. Vorrichtung (1) nach einem der Ansprüche 3 bis 18,
**dadurch gekennzeichnet, dass** es Umwandlungseinrichtungen für die Gleich- oder Wechselspannung umfasst, die jeweils von den Generatoren (14) in einer Wechsel- oder Gleichspannung erzeugt wird.

20. Vorrichtung (1) nach einem der Ansprüche 3 bis 19,
**dadurch gekennzeichnet, dass** sie ein "Bus-Laufwerk" umfasst, durch das sich die Energien von jedem Generator (14) summieren lassen.

## Claims

1. A device (1) comprising a float (3) guided along a guiding device (2) anchored in the sea bed with guiding means (12) and including conversion means (14) for converting relative displacements between the float (3) and the guiding device (2) into usable energy, the guiding means (12) comprising at least one roller, one pinion or one wheel in contact with a rolling path of the guiding device (2), and the conversion means (14) comprising at least one electric generator driven into rotation by said roller, said pinion or said wheel being mounted so as to rotate around an axis (13) connected to the float (3), **characterized in that**
the float (3) consists of two detachable floating shells (18, 18') which may be assembled and disassembled around a substantially vertical axis

2. The device (1) according to claim 1,
**characterized in that**:
• the guiding device (2) comprises at least two opposite rolling paths;
• the guiding means (12) comprise at least two wheels or rollers mounted so as to rotate around two respective axes of rotation securely attached to said float (3) and radially mobile relatively to the guiding device (2), both of these wheels or rollers being positioned so as to be able to respectively roll on said rolling paths;
• the conversion means (14) comprise means for converting the rotary movement of the wheels or rollers into usable energy;
• the float (3) comprises means allowing the wheels or the rollers to exert an antagonistic pressure on the rolling paths, so that with said wheels or said rollers it is possible to both ensure:
∘ guiding of the float (3) on the guiding device (2); and
∘ their driving into rotation during displacements of said float (3).

3. The device (1) according to any of the preceding claims, **characterized in that** it comprises:
• a substantially vertical guiding support (2) directly or indirectly attached to a sea bed;
• a float (3) including:
∘ a through-hole (4), with a substantially vertical axis, which opens out in its upper face and its lower face, the diameter of this hole (4) being substantially larger than the one of the guiding support (2) in order to allow the float (3) to slide relatively to said support (2);
∘ at least one compartment (5) which comprises a front aperture (6) opening out into said through-hole (4), a lower wall, an upper wall, a rear wall (9) and two sidewalls (10) each including an orifice with a horizontal axis (11) facing each other; this compartment (5) also comprises:
➢ at least one guiding means (12) such as a roller, or a wheel, the horizontal axis of which is substantially parallel to the plane of said aperture (6), and positioned so as to be in contact with the surface of said guiding support (2) when the latter is securely attached to the float (3);
➢ at least one driving shaft (13) passing through the horizontal axis of said guiding means (2) and crossing said orifices (11) of said sidewalls (10), at least one of the ends of this driving shaft (13) being connected to at least one generator (14) comprised in the body of the float (3).

4. The device (1) according to claim 3,
**characterized in that** the guiding device (2) is attached to a floating base which is held in position by means of substantially parallel and permanently tensed anchoring lines allowing it to remain fixed relatively to the sea bed.

5. The device (1) according to any of claims 3 and 4,
**characterized in that**, the guiding support (2) is cylindrical or with facets and is conformed in order not to oppose excessive resistance to the elements.

6. The device (1) according to any of claims 3 to 5,
**characterized in that** the guiding support (2) comprises several substantially vertical legs, a float (3) sliding relatively to each of its legs.

7. The device (1) according to any of claims 3 to 6,
**characterized in that** the compartments (5) are cylindrical.

8. The device (1) according to any of claims 3 to 7,
**characterized in that** each of said compartments (5) does not comprise any lower wall and any upper wall.

9. The device (1) according to any of claims 3 to 8,
**characterized in that** the body of the float (3) comprises O-ring seal gaskets (15) which are positioned so as to partly cover said orifices (11) of said sidewalls (10) and to clasp said driving shafts (13).

10. The device (1) according to any of claims 3 to 9,
**characterized in that** the conversion means (14) are formed by hydraulic pumps.

11. The device (1) according to any of claims 3 to 10,
**characterized in that** the generator(s) (14) is (are) sealed and operate(s) alternately in one direction or in the other.

12. The device (1) according to any of claims 3 to 11,
**characterized in that** the generators (14) form a means for producing heat energy, this heat energy released by the generators (14) during their operation allowing water to be heated.

13. The device (1) according to any of claims 3 to 12,
**characterized in that** it is overhung by an industrial platform (16) supported by the guiding support (2) and on which the thereby produced electric energy may be used for powering its industrial equipment.

14. The device (1) according to claim 13,
**characterized in that** the platforms (16) comprise a device for producing wind energy (17) and/or a device for producing heat energy and/or a device for producing solar energy (19).

15. The device (1) according to any of claims 3 to 14,
**characterized in that** the devices according to the invention (1) are grouped as a network.

16. The device (1) according to any of claims 3 to 15,
**characterized in that** it comprises an electric control device for controlling:
• the generators (14) in real time and therefore for managing energy production depending on the needs;
• the float (3) in order to adapt the amplitude of its travel according to the tidal range and movements of the swell; the amplitude of the travel of the float (3) should be at least equal to the sum of the tidal range, of the amplitude of the swell and of a safety distance;
• the actuation and stopping of the sliding of the floats (3) relatively to the guiding devices (2);
• the resistance encountered by the guiding means (12) during their displacements on the surface of said guiding devices (2).

17. The device (1) according to any of claims 3 to 16,
**characterized in that** the float (3) comprises ballasting compartments at its base.

18. The device (1) according to claim 17,
**characterized in that** the filling and emptying of said ballasting compartments are controlled by said electronic control device.

19. The device (1) according to any of claims 3 to 18,
**characterized in that** it comprises means for converting the DC or AC voltage generated by the generators (14) into an AC or DC voltage, respectively.

20. The device (1) according to any of claims 3 to 19,
**characterized in that** it comprises a bus drive for adding the energies of each generator (14).
